Europäisches Patentamt

European Patent Office

Office européen des brevets

(11) Veröffentlichungsnummer: **0 424 615 A1**

# EUROPÄISCHE PATENTANMELDUNG

(21) Anmeldenummer: 90114111.9

(22) Anmeldetag: 24.07.90

(51) Int. Cl.5: **A47J 31/06, A47J 31/02**

(30) Priorität: 23.10.89 DE 8912543 U
23.10.89 DE 3935211

(43) Veröffentlichungstag der Anmeldung:
**02.05.91 Patentblatt 91/18**

(84) Benannte Vertragsstaaten:
**AT BE CH DE DK ES FR GB GR IT LI LU NL SE**

(71) Anmelder: **Brandt, Werner**
**Marburgerstrasse 6**
**W-3554 Lohra(DE)**

Anmelder: **Lähn, Bernd Peter**
**Wandsbecker Chaussee 180a**

**W-2000 Hamburg 76(DE)**

Anmelder: **Schulz, Angelika**
**Meilsener Birkenweg 21**
**W-2110 Buchholz(DE)**

(72) Erfinder: **Brandt, Werner**
**Marburger Strasse 6**
**W-3554 Lohra(DE)**

(74) Vertreter: **Richter, Werdermann & Gerbaulet**
**Neuer Wall 10**
**W-2000 Hamburg 36(DE)**

(54) **Kaffeeaufbrühfilter zur Herstellung einer Tassenportion Filterkaffee.**

(57) Zur Herstellung einer Tassenportion Filterkaffee besteht der Kaffeeaufbrühfilter (100) aus einem als zylindrischer Hohlkörper (11) ausgebildeten Formkörper (10) aus einem bei Wassereinwirkung eine ausreichende Eigensteifigkeit und Formbeständigkeit aufweisenden Filterpapier mit einer oberen Einfüllöffnung (15) für das Einfüllen von kochend heißem Wasser, wobei der Innenraum des Formkörpers (10) in mehrere, übereinanderliegende Kammern (30,130,230) unterteilt ist, von denen die obere Kammer (30) als Kochendwasseraufnahmekammer in die Wassereinfüllöffnung (15) mündet, die mittlere Kammer (130) eine auf der unteren Trennwand (120) aufliegende Tassenportion (40) gemahlenen Kaffees aufnimmt und die untere Kammer (230) zur Filterkaffeeableitung dient. Zum Aufbrühen einer Tasse Filterkaffee wird der Kaffeeaufbrühfilter (100) in eine Kaffeetasse gestellt und kochend heißes Wasser in die Wassereinfüllöffnung (15) des Formkörpers (10) gegossen, wobei während des Aufbrühvorganges der Kaffeeaufbrühfilter (100) mit steigendem Filterkaffeespiegel im Innenraum des Kaffeeaufbrühfilters (100) nicht aufschwimmt.

FIG.1

EP 0 424 615 A1

## KAFFEEAUFBRÜHFILTER ZUR HERSTELLUNG EINER TASSENPORTION FILTERKAFFEE.

Die Erfindung betrifft einen Kaffeeaufbrühfilter zur Herstellung mindestens einer Tassenportion Filterkaffee.

Für das Zubereiten eines Kaffeegetränks aus gerösteten und gemahlenen Kaffeebohnen sind zahlreiche Verfahren bekannt. Neben der Abkochung, die der türkisch-arabischen Bereitungsweise zugrunde liegt, bei der staubfeines Kaffeemehl mit kaltem Wasser und Zucker zum Sieden erwärmt und dann der im Trübgetränk sich bildende Satz mit genossen wird, wird nach dem Aufgußverfahren Kaffeemehl mit kochend heißem Wasser zusammengebracht. Nach Ziehenlassen wird abgeseiht oder filtriert unter Verwendung von Papier-, Gewebs-oder Metallfilter. Beim Auslaugeverfahren wird ein kaffeemehlbeinhaltender Beutel aus durchlässigem Gewebe aus Natur- oder Kunstfaser oder aus gehärtetem Filterpapier in heißes Wasser gehängt. Darüber hinaus ist das Zubereiten von Kaffeegetränken mittels Kaffeeautomaten und Kaffeemaschinen bekannt.

Güte und Stärke eines Kaffeegetränkes hängen vornehmlich von Art und Menge des verwendeten Rohstoffes und von der Bereitungsweise , den verwendeten Gerätschaften und dem Wasser ab. Die Menge des je Tasse verwendeten Kaffeemehls wird sehr vom Geschmacksbedürfnis des einzelnen Menschen, dem Wohlstand der Verbraucher und auch gesundheitlichen Rücksichten bestimmt. Der Rauminhalt einer Kaffeetasse liegt üblicherweise zwischen 130 bis 165 ccm. Die Norm einer Tasse wird zu etwa 150 ccm angenommen. Für die Zubereitung des Kaffeegetränkes werden Konzentrationen von 1 g bis 30 g Kaffeemehl auf eine Tasse Wasser empfohlen.

Die Begriffe des "schwachen" und "starken" Kaffees schwanken hinsichtlich ihrer Konzentrationen sehr. Als "mittelstarker Kaffee" ist ein Getränk anzusehen, das aus 6 bis 8 g Kaffeemehl je Tasse bereitet wird.

Da der Gehalt eines Aufgusses an allen Bestandteilen der gerösteten Bohne von der Zusammensetzung des jeweils verwendeten Kaffees und der Art der Zubereitung abhängt, werden solche Kaffeegetränke bevorzugt, die durch Aufguß von Kaffeemehl mit kochend heißem Wasser in einem Filter unter Verwendung eines Papierfilters zubereitet sind.

Beim Aufgußverfahren wird das Kaffeemehl mit dem kochend heißem Wasser außerhalb des den Filterkaffee aufnehmenden Behältnisses, wie Kaffeekanne od.dgl., zusammengebracht. Das Filtern des Kaffee erfolgt somit außerhalb des Behältnisses, was mühevoll und unwirtschaftlich ist, wenn beispielsweise nur eine Tasse Filterkaffee hergestellt wird. Hinzu kommt, daß keine vollständige Ausschöpfung des Kaffeearomas und der Kaffeebestandteile möglich ist.

Der Erfindung liegt die Aufgabe zugrunde, eine Gerätschaft für das Herstellen eines Kaffeegetränkes nach dem Aufgußverfahren zu schaffen, mit der mühelos und wirtschaftlich eine Tasse Filterkaffee bei voller Ausnutzung des Kaffeearomas durch Verlagerung des Filter- und Aufbrühvorganges in den Innenraum der Tasse herstellbar ist.

Diese Aufgabe wird durch die im Patentanspruch 1 gekennzeichneten Merkmale gelöst.

Mit einem derart erfindungsgemäß ausgebildeten Kaffeeaufbrühfilter wird die Herstellung einer Tassenportion Filterkaffee in den Innenraum einer Kaffeetasse oder eines anderen geeigneten Behältnisses verlegt. Der Filtervorgang erfolgt nicht mehr außerhalb des Behältnisses, sondern in diesem selbst. Nach dem Einsetzen des Kaffeeaufbrühfilters in eine Kaffeetasse wird lediglich kochend heißes Wasser dem Kaffeeaufbrühfilter über dessen Wassereinfüllöffnung zugeführt, wobei das kochend heiße Wasser den Kaffeeaufbrühfilter durchläuft und mit der im Innenraum des Filters angeordneten Tassenportion gemahlenen Kaffees zusammengebracht wird. Der Filtervorgang erfolgt dann selbst durch die aus Filterpapier bestehende Seitenwand des Formkörpers des Kaffeeaufbrühfilters. Der erzeugte Filterkaffee tritt durch die Seitenwand in den Innenraum der Kaffeetasse und nachdem die dem Inhalt einer Kaffeetasse entsprechende Menge an kochend heißem Wasser dem Kaffeeaufbrühfilter zugeführt ist, wird der Kaffeeaufbrühfilter der Tasse entnommen und eine Tasse Filterkaffee steht zur Verfügung. Der Kaffeeaufbrühfilter steht senkrecht im Innenraum der Tasse und schwimmt aufgrund seines Eigengewichtes nicht auf, so daß der Kaffeeaufbrühfilter die Funktion eines feststehenden Filters übernimmt.

Die Ausgestaltung des Formkörpers des Kaffeeaufbrühfilters ist derart, daß der aufgebrühte Filterkaffee im unteren Bereich des Kaffeeaufbrühfilters in den Innenraum der Tasse austritt. Der obere Bereich des Formkörpers des Kaffeeaufbrühfilters ist so gestaltet, daß bei Einwirkung von Wasser der Formkörper seine Eigensteifigkeit und Formstabilität beibehält. Dies wird dadurch erreicht, daß der Innenraum des Formkörpers des Kaffeeaufbrühfilters in drei übereinanderliegende Kammern aufgeteilt ist, von denen die mittlere Kammer die Tassenportionen gemahlenen Kaffees aufnimmt. Die die obere Kochendwasseraufnahmekammer begrenzende Seitenwand des Formkörpers besteht dabei vorzugsweise aus wasserundurchlässigem und wasserresistentem Material, wohingegen die Wandabschnitte , die die mittlere und die bodenseitige Kammer begrenzen, aus handelsüblichem Filterpapier bestehen. Im Bereich dieser Kammern ist das Filterpapier mit zusätzlichen Versteifungen versehen, um die Formstabilität des Kaffeeaufbrühfilters während des Aufbrühvorganges zu gewährleisten. Es besteht jedoch auch die Möglichkeit, nur die die untere Kammer begrenzende Seitenwand wasserdurchlässig auszubilden, so daß der Filtervorgang ausschließlich im Bereich der unteren Kammer erfolgt. Die die Seitenwand des Formkörpers des Kaffeeaufbrühfilters versteifenden Einrichtungen dienen gleichzeitig zur Gewichtserhöhung des Kaffeeaufbrühfilters, damit der Filter während des Aufbrühvorganges nicht aufschwimmen kann. Wesentlich ist, daß der Kaffeeaufbrühfilter während des gesamten Aufbrühvorganges eine senkrechte Stellung im Innenraum der Tasse einnimmt.

Der von der mittleren Kammer des Formkörpers des Kaffeeaufbrühfilters gebildete Innenraum ist vorzugsweise größer gegenüber der von der Tassenportion gemahlenen Kaffees eingenommenen Schicht. Dadurch wird der Vorteil erreicht, daß beim Aufbrühen des Kaffees das Kaffeemehl in dieser mittleren Kammer aufschwimmt und sich in dem ansteigenden Wasser verteilt, wodurch es zu einer vollen Ausnutzung des Kaffeearomas kommt. Neben einer Ausgestaltung des Kaffeeaufbrühfilters mit drei Kammern besteht auch die Möglichkeit, den Formkörper nur mit zwei Kammern auszubilden, wobei dann die obere Kammer die Tassenportion gemahlenen Kaffees aufnimmt. Für den Verkauf eines derartigen Kaffeeaufbrühfilters ist dann erforderlich, daß die obere Wassereinfüllöffnung des Formkörpers verschlos sen ist, wobei der Verschluß dann so ausgebildet ist, daß der Verschluß für den Gebrauch entfernt werden kann. Das kochend heiße Wasser wird dann direkt über die Wassereinfüllöffnung des Formkörpers dem Kaffeemehl zugeführt. Bei einer entsprechenden Ausgestaltung des Formkörpers aus Filterpapier erfolgt dann der Filtervorgang im Bereich der unteren Kammer bzw. im Bereich der beiden Kammern des Kaffeeaufbrühfilters.

Vorteilhafte Ausgestaltungen der Erfindung sind in den Unteransprüchen gekennzeichnet.

Ausführungsbeispiele der Erfindung werden nachstehend anhand der Zeichnung näher erläutert. Es zeigen

Fig. 1 in einer schaubildlichen Ansicht den Kaffeeaufbrühfilter,

Fig. 2 den Kaffeeaufbrühfilter in einem senkrechten Längsschnitt,

Fig. 3 den mit einer aromaerhaltenden Außenumhüllung versehenen Kaffeeaufbrühfilter in einem Längsschnitt,

Fig. 4 in einer schaubildlichen Ansicht einen Kaffeeaufbrühfilter mit in dessen Seitenwand angeordneten Seitenwandverstärkungen,

Fig. 5 den Kaffeeaufbrühfilter gemäß Fig.4 in einem senkrechten Teillängsschnitt,

Fig. 6 teils in Ansicht, teils in einem senkrechten Schnitt eine Kaffeetasse mit in dieser angeordnetem Kaffeeaufbrühfilter, und

Fig. 7 teils in Ansicht, teils in einem senkrechten Schnitt eine Kaffeetasse mit eingehängtem Kaffeeaufbrühfilter.

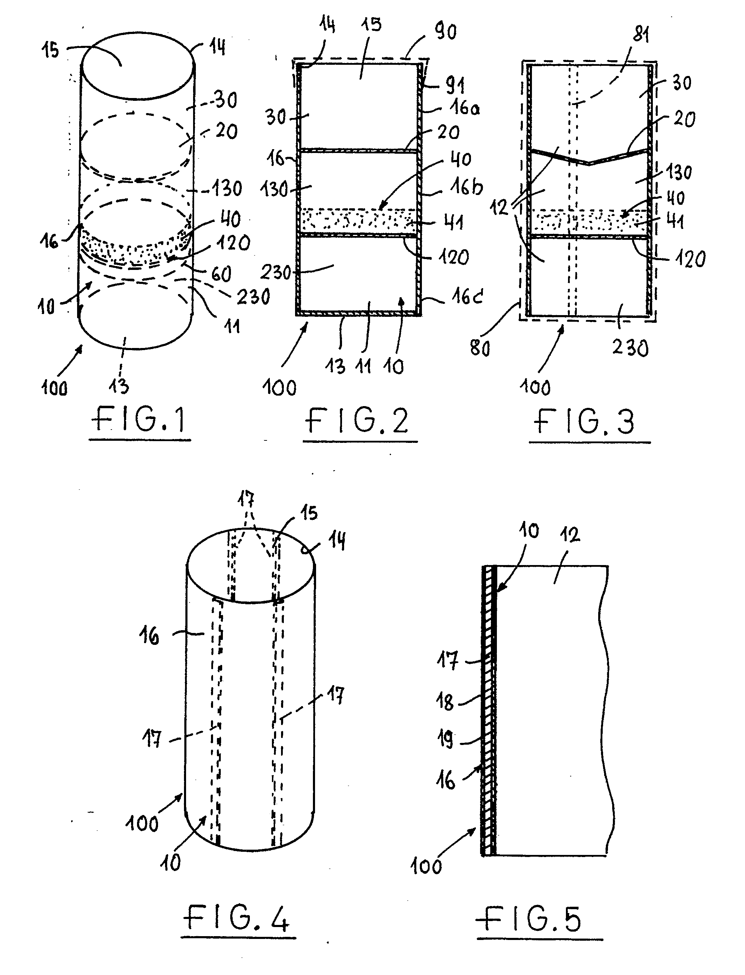

Der in den Fig. 1 bis 5 mit 100 bezeichnete Kaffeeaufbrühfilter dient zur Herstellung mindestens einer Tassenportion Filterkaffee und besteht aus einem als zylindrischer Hohlkörper 11 ausgebildeten Formkörper 10 mit einer oberen Einfüllöffnung 15 für kochend heißes Wasser und mit einer bodenseitigen Standfläche 13. Der Formkörper 10 weist einen kreisförmigen Querschnitt auf, wobei jedoch der Querschnitt auch eine andere geometrische Form aufweisen kann. Die obere Wassereinfüllöffnung 15 ist begrenzt vom umlaufenden Rand 14 des Formkörpers 10. Bodenseitig kann der Formkörper 10 offen oder geschlossen ausgebildet sein.

Der Formkörper 10 und insbesondere seine Seitenwand 16 bestehen aus eine ausreichende Eigensteifigkeit und Formbeständigkeit aufweisenden, handelsüblichen Filterpapier, so wie dieses für Kaffeefilter angeboten wird. Auf die Eigensteifigkeit und Formbeständigkeit des Formkörpers 10 wird nachstehend näher eingegangen.

Der Innenraum 12 des Formkörpers 10 des Kaffeeaufbrühfilters 100 ist vermittels zweier quer zur Längsrichtung des Formkörpers 10 verlaufender und in einem Abstand voneinander angeordneter Trennwände 20,120 aus dünnem Filterpapier unter Ausbildung von drei übereinanderliegenden Kammern 30,130,230 unterteilt, von denen die obere Kammer 30 als Kochendwasseraufnahmekammer in die Wassereinfüllöffnung 15 mündet (Fig.2 und 3). Die mittlere Kammer 130 dient zur Aufnahme einer Tassenportion 40 gemahlenen Kaffees, wobei die Kaffeeschicht 41 auf der unteren Trennwand 120 aufliegt (Fig.2,3 und 5).Die untere Kammer 230 dient zur Filterkaffeeableitung. Die obere Trennwand 20 kann plan (Fig.2) oder auch muldenförmig ausgebildet sein (Fig.3). Der Abstand zwischen den beiden Trennwänden 20,120 kann der Höhe der von der Tassenportion 40 gemahlenen Kaffees gebildeten Schicht 41 entsprechen, jedoch besteht auch die Möglichkeit, die Kammer 130 so groß zu bemessen, daß die von der Tassenportion 40 gemahlenen Kaffees gebildete Schicht 41 nur einen Teil des Raumes der Kammer 130 einnimmt, so daß beim Eingießen von kochend heißem Wasser in den Kaffeeaufbrühfilter der gemahlene Kaffee bzw. das Kaffeemehl im zulaufenden und sich anstauenden Wasser aufschwimmen kann, so daß das volle Kaffeearoma dem Kaffeemehl entzogen werden kann.

Es besteht jedoch darüber hinaus nach einer weiteren Ausführungsform auch die Möglichkeit, unter Weglassung der Trennwand 20 in dem Innenraum 12 des Formkörpers 10 nur zwei Kammern auszubilden, nämlich die Kammer 30 und 230, wobei dann die Kammer 30 die Tassenportion 40 gemahlenen Kaffees aufnimmt.

Die Seitenwand 16 des Formkörpers 10 besteht aus handelsüblichem Filterpapier. Endseitig ist das Filterpapier mehrfach umgelegt und aufeinander gefaltet, so daß verstärkte Endabschnitte erhalten werden. Die Seitenwand 16 des Formkörpers 10 kann dabei so ausgebildet sein, daß sich die Filterwirkung über die gesamte Seitenwandfläche des Kaffeeaufbrühfilters 100 erstreckt. Ein gezieltes Filtern wird dadurch erreicht, daß zumindest der die untere Kammer 230 begrenzende Seitenwandabschnitt 16c der Seitenwand 16 aus Filterpapier besteht, während die beiden anderen, die Kammern 30,130 begrenzenden Seitenwandabschnitte 16a,16b der Seitenwand 16 aus wasserundurchlässigem Material bestehen (Fig 2). In diesem Fall sind die Wandabschnitte 16a,16b aus einer geschmacksneutralen Kunststoffolie gefertigt; auch mit einer Kunststoffolie kaschiertes Filterpapier oder wasserabstoßend imprägniertes Filterpapier kann zur Herstellung des Formkörpers 10 verwendet werden, wobei eine Wasserundurchlässigkeit dann nur in der Seitenwand im Bereich der beiden Kammern 30,130 gegeben ist, so daß während des Aufbrühvorganges das dem Kaffeeaufbrühfilter 100 zugeführte kochend heiße Wasser durch die Kaffeemehlschicht 41 in die untere Kammer 230 strömt, so daß der Filterkaffee durch die aus Filterpapier bestehende Seitenwand des Formkörpers 10 hindurchdiffundiert. Darüber hinaus kann auch der Seitenwandabschnitt 16b der Seitenwand 16 des Formkörpers 10 wie der Seitenwandabschnitt 16c aus Filterpapier bestehen, so daß dann die von den Seitenwandabschnitten 16b,16c gebildete Wandfläche den eigentlichen Filter für die Herstellung des Filterkaffees dient.

Der Kaffeeaufbrühfilter 100 weist Abmessungen auf, die gegenüber den Innenabmessungen einer Kaffeetasse kleiner sind. Was die Höhe des Kaffeeaufbrühfilters 100 anbelangt, so kann diese gegenüber der Höhe einer Kaffeetasse größer oder auch kleiner sein.

Zur Erhöhung der Eigensteifigkeit und Formbeständigkeit des Formkörpers 10 ist dieser mit Seitenwandverstärkungen 17 versehen, die aus stabförmigen Profilen aus Kunststoffen oder anderen geeigneten Materialien bestehen und mit dem die Seitenwand 16 des Formkörpers 10 bildenden Filterpapier verbunden sind (Fig.4 und 5). Diese Seitenwandverstärkungen 17 dienen bei geeigneter Materialwahl gleich zeitig zur Erhöhung des Eigengewichtes des Kaffeeaufbrühfilters 100, so daß ein Anheben,Aufschwimmen oder seitliches Neigen des Kaffeeaufbrühfilters während des Filtervorganges vermieden wird. Das Eigengewicht des Formkörpers 10 kann auch durch eine entsprechende Wahl des Materials für den Formkörperboden erhöht werden, z.B. durch eine entsprechend dick bemessene Kunststoffplatte als Formkörperboden.

Die Seitenwand 16 des Formkörpers 10 kann auch aus einer Doppellage aus Filterpapier bestehen, wobei dann zwischen den beiden Filterpapierschichten 18,19 die Seitenwandverstärkungen 17 angeordnet sind (Fig.5). Bei bodenseitig verschlossen ausgebildetem Formkörper 10 kann die untere Kammer 230 zur Aufnahme eines Süßmittels, wie Zucker und/oder Milchpulver, dienen. Der die untere Kammer 230 begrenzende Seitenwandabschnitt 16c des Formkörpers 10 ist dann mittels einer Trennperforation 60 vom übrigen Formkörperteil 16a,16b abtrennbar. Aufgrund dieser Ausgestaltung bietet sich die Möglichkeit, falls kein Zucker und/oder keine Milch gewünscht wird, durch Abnehmen des die Kammer 230 aufnehmenden Formkörperteils nur schwarzen Filterkaffee zu erhalten.

Nach einer weiteren Ausführungsform gemäß Fig.7 ist der Formkörper 10 an seinem oberen umlaufenden Rand 14 mit einer Einrichtung 70 zum Einhängen des Kaffeeaufbrühfilters 100 in eine Kaffeetasse 50 versehen, wobei diese Einhängeeinrichtung 70 aus einem nach außen ausstellbaren Kragen 71 besteht, der umlaufend und auskragend ist,und aus einem eine Eigensteifigkeit und Formbeständigkeit bei Einwirkung von Wasser aufweisenden, wasserundurchlässigen Material, wie Kunststoffolie , kaschiertes Papier oder kaschierte Pappe od.dgl. besteht. Vermittels dieser Einhängeeinrichtung 70 wird der Kaffeeaufbrühfilter 100 in den Innenraum 51 einer Tasse 50 eingehängt, so daß sich der umlaufende Kragen 51 des Formkörpers 10 am um laufenden Rand 52 der Tasse 50 abstützt (Fig.7). Die Ausbildung des Kragens 71 ist dabei derart, daß eine Wassereinlaufmulde bzw. ein trichterartiger Einlauf für das kochend heiße Wasser ausgebildet wird. Dadurch, daß der Kragen 71 aus wasserundurchlässigem Material besteht, wird beim Eingießen von kochend heißem Wasser in Pfeilrichtung X das Wasser über die geneigt verlaufende Wandfläche des Kragens 71 der Wassereinfüllöffnung 15 zugeleitet, so daß alles zugeführte kochend heiße Wasser dem Kaffeeaufbrühfilter 100 zugeleitet wird. Bei dieser Ausführungsform ist es vorteilhaft, wenn der Formkörper 10 des Kaffeeaufbrühfilters 100 eine Länge bzw. zum Innenraum 51 der Tasse 50 eine Höhe aufweist, die eine freie Aufhängung des Kaffeeaufbrühfilters 100 in dem Tasseninnenraum 51 ermöglicht, ohne daß sich dabei der Kaffeeaufbrühfilter am Tassenboden 53 abstützt. Im Nichtgebrauchszustand ist der Kragen 71 durch Faltung an die Formkörperseitenwand 16 anlegbar.

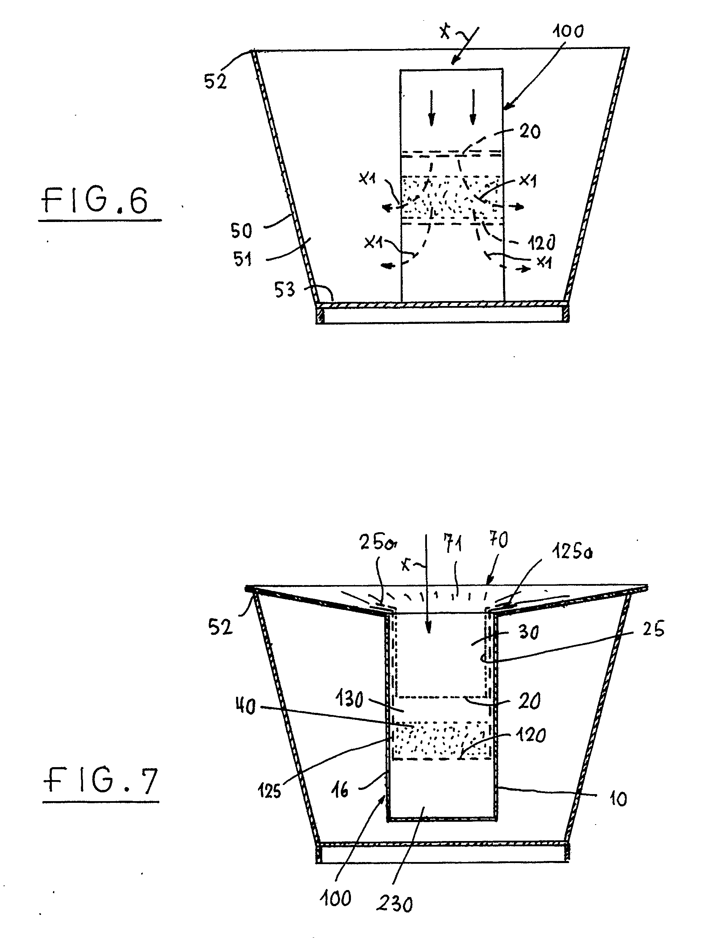

Zum Schutz des Kaffeearomas ist der Formkörper 10 des Kaffeeaufbrühfilters 100 mit einer als Aufreißverpackung ausgebildeten Umhüllung 80 aus dünner Metallfolie oder einem anderen geeigneten Material versehen (Fig.3). Mittels eines Aufreißfadens 81 oder einer entsprechend gestalteten Trennperforation ist die Umhüllung 80 auftrennbar und vom Kaffeeaufbrühfilter lösbar, so daß der aus der Umhüllung freigelegte Kaffeeaufbrühfilter zur Herstellung einer Portion Filterkaffee eingesetzt werden kann, indem der Kaffeeaufbrühfilter 100 lediglich in eine Tasse 50 eingesetzt wird, woraufhin dann kochend heißes Wasser in Pfeilrichtung X über die Wassereinfüllöffnung 15 dem Innenraum 12 des Formkörpers 10 des Kaffeeaufbrühfilters 100 zugeführt wird (Fig.6). Der Filterkaffeeaustritt erolgt in Pfeilrichtung X1 (Fig.6). Die Wassereinfüllöffnung 15 des Formkörpers 10 kann mittels einer Folie aus metallischem Material oder einem anderen, geschmacks neutralen Kunststoff abgedeckt sein. Diese vorzugsweise kappenförmig ausgebildete Folie ist dann mittels einer Trennperforation 91 an der Seitenwand 16 des Formkörpers 10 gehalten (Fig.2). Ist der Formkörper 10 des Kaffeeaufbrühfilters 100 zum Schutz des Kaffeearomas mit einer als Aufreißverpackung ausgebildeten Umhüllung 80 versehen, dann kann die die Wassereinfüllöffnung 15 verschließende Folie 90 trennbar mit dieser Umhüllung 80 verbunden sein, so daß nach dem Abtrennen der Folie 90 der Kaffeeaufbrühfilter 100 aus der Umhüllung 80 herausgenommen werden kann, die der Formgebung und den Außenabmessungen des Formkörpers 10 des Kaffeeaufbrühfilters 100 entspricht.

Alle für die Herstellung des Formkörpers 10 verwendeten Materialien sind geschmacksneutraler Art und beeinflussen in keiner Weise das Aroma des Kaffees in dem Kaffeeaufbrühfilter 100. Die Trennwände 20,30 können als Einsatzkörper ausgebildet sein und sind mittels geeigneter Verbindungsmittel an der Innenwandfläche der Seitenwand 16 des Formkörpers 10 gehalten. Die Ausbildung der Kammern 30,130,230 kann auch unter Verwendung von zwei Einsatzkörpern erfolgen, die unterschiedlich lang bemessen und im Innenraum 12 des Formkörpers 10 gehalten sind. Figur 7 zeigt einen derart ausgebildeten Kaffeeaufbrühfilter 100, der in seinem Innenraum 12 zwei zylindrische und bodenseitig verschlossene Einsatzkörper 25,125 aufweist, wobei der Einsatzkörper 125 mit seinem oberen umlaufenden und seitlich auskragend ausgebildeten Rand 125a auf dem oberen umlaufenden Rand 14 des Formkörpers 10 sich abstützt. Der Boden des Einsatzkörpers bildet die untere Trennwand 120. Im Innenraum des Einsatzkörpers 125 ist dann der kürzer bemessene Einsatzkörper 25 angeordnet, der sich mit seinem oberen umlaufenden und seitlich auskragenden Rand 25a auf dem umlaufenden Rand 125a des Einsatzkörpers 125 abstützt. Der Boden des Einsatzkörpers 25 bildet die Trennwand 20. Beide Einsatzkörper 25,125 bestehen aus Filterpapier. Durch die unterschiedlichen Längen der beiden Einsatzkörper 25,125 wird die mittlere Kammer 130 ausgebildet, die zur Aufnahme der Tassenportion 40 an gemahlenem Kaffee dient.

Der Kaffeeaufbrühfilter 100 kann auch so bemessen sein, daß dieser nicht nur eine einzige Tassenportion an gemahlenem Kaffee aufnimmt. Die Menge an Kaffeemehl kann auch so bemessen sein, daß mehr als eine Tasse Kaffee erhalten wird, was insbesondere dann von Vorteil ist, wenn es sich um großvolumige Tassen oder andersartige behältnisse handelt.

Besteht der Formkörper 10 des Kaffeeaufbrühfilters 100 ausschließlich aus Filterpapier, dann ist eine umweltfreundliche Entsorgung gewährleistet.

**Ansprüche**

1. Kaffeeaufbrühfilter zur Herstellung mindestens einer Tassenportion Filterkaffee, dadurch gekennzeichnet, daß der Kaffeeaufbrühfilter (100) aus einem als zylindrischer Hohlkörper (11) ausgebildeter und mit einer bodenseitigen Standfläche (13) versehener Formkörper (10) mit einer oberen Wassereinfüllöffnung (15) aus bei Wassereinwirkung eine ausreichende Eigensteifigkeit und Formbeständigkeit aufweisenden Filterpapier besteht, wobei der Innenraum (12) des Formkörpers (10) vermittels zweier quer zur Längsrichtung des Formkörpers (10) verlaufender Trennwände (20,120) aus dünnem Filterpapier unter Ausbildung von drei übereinanderliegenden Kammern (30,130,230) unterteilt ist, von denen die obere Kammer (30) als Kochendwasseraufnahmekammer in die Wassereinfüllöffnung (15) mündet, die mittlere Kammer (130) eine auf der unteren Trennwand (120) aufliegende Tassenportion (40) gemahlenen Kaffees aufnimmt und die untere Kammer (230) zur Filterkaffeeableitung dient, wobei der Wandabschnitt (16a) des Formkörpers (10) im Bereich der oberen Kammer (30) und/oder der mittleren Kammer (130) aus einem wasserundurchlässigen Material besteht bzw. das Filterpapier in den Bereichen dieser Kammern (30,130) mit einer geschmacksneutralen, wasserundurchlässigen Beschichtung mittels einer Kunststoffolie oder Imprägnierung versehen ist, und daß der Formkörper (10) Abmessungen aufweist, die gegenüber den Innenabmessungen einer Tasse kleiner sind und mit einem ein Aufschwimmen und eine Lagenänderung während des Filtervorganges vermeidenden Eigengewicht versehen ist,

2. Kaffeeaufbrühfilter nach Anspruch 1, dadurch gekenn zeichnet, daß der Formkörper (10) bodenseitig offen ausgebildet ist.

3. Kaffeeaufbrühfilter nach einem der Ansprüche 1 und 2,
dadurch gekennzeichnet, daß der Formkörper (10) zur Erhöhung der Eigensteifigkeit und Formbeständigkeit mit Seitenwandverstärkungen (17) versehen ist, die aus stabförmigen Kunststoffprofilen bestehen und mit dem die Seitenwand (16) des Formkörpers (10) bildenden Filterpapier verbunden sind.

4. Kaffeeaufbrühfilter nach Anspruch 3, dadurch gekennzeichnet, daß die Seitenwand (16) des Formkörpers (10) aus einer Doppellage (18,19) aus Filterpapier besteht, wobei zwischen den beiden Filterpapierschichten (18,19) die Seitenwandverstärkungen (17) angeordnet sind.

5. Kaffeeaufbrühfilter nach einem der Ansprüche 1 bis 4,
dadurch gekennzeichnet, daß die die Tassenportion (40) gemahlenen Kaffees aufnehmende mittlere Kammer (130) eine Höhe aufweist, die gegenüber der Höhe der von der Tassenportion (40) gemahlenen Kaffees gebildeten Schicht (41) größer ist.

6. Kaffeeaufbrühfilter nach einem der Ansprüche 1 bis 5,
dadurch gekennzeichnet, daß bei bodenseitig verschlossen ausgebildetem Formkörper (10) in der unteren Kammer (230) ein Süßmittel, wie Zucker und/oder Milchpulver angeordnet ist.

7. Kaffeeaufbrühfilter nach Anspruch 6, dadurch gekennzeichnet, daß der die untere Kammer (230) begrenzende Wandabschnitt (16c) des Formkörpers (10) mittels einer Trennperforation (60) vom übrigen Formkörperteil (16a,16b) abtrennbar ist.

8. Kaffeeaufbrühfilter nach einem der Ansprüche 1 bis 7,
dadurch gekennzeichnet, daß der Formkörper (10) an seinem oberen umlaufenden Rand (14) eine Einrichtung (70) zum Einhängen des Kaffeeaufbrühfilters (100) in eine Kaffeetasse aus einem nach außen ausstellbaren Kragen (71) aus einem eine Eigensteifigkeit und Formbeständigkeit bei Einwirkung von Wasser aufweisenden, wasserundurchlässigen Material, wie Kunststoffolie, kaschiertes Papier oder Pappe od.dgl. aufweist, die für den Kaffeeaufbrühvorgang auf dem umlaufenden Tassenrand aufliegt.

9. Kaffeeaufbrühfilter nach einem der Ansprüche 1 bis 8,
dadurch gekennzeichnet, daß der Formkörper (10) des Kaffeeaufbrühfilters (100) zum Schutz des Kaffeearomas mit einer als Aufreißverpackung ausgebildeten Umhüllung (80) aus dünner Metallfolie oder einem anderen geeigneten Material versehen ist.

10. Kaffeeaufbrühfilter nach einem der Ansprüche 1 bis 9,
dadurch gekennzeichnet, daß die Wassereinfüllöffnung (15) des Formkörpers (10) mittels einer Folie (90) aus metallischem Material oder aus einem geschmacksneutralen Kunststoff abgedeckt ist, die mittels einer Trennperforation (91) an der Seitenwand (16) des Formkörpers (10) gehalten ist.

11. Kaffeeaufbrühfilter nach einem der Ansprüche 1 bis 10, dadurch gekennzeichnet, daß die obere (30) und die mittlere Kammer (130) des Formkörpers (10) zu einer die Tassenportion (40) gemahlenen Kaffees aufnehmenden Kammer unter Weglassung der oberen Trennwand (20) zusammengefaßt sind, wobei die gesamte Seitenwand (16) des Formkörpers (10) oder nur der die untere Kammer (230) begrenzende Seitenwandabschnitt (16c) aus Filterpapier besteht.

12. Kaffeeaufbrühfilter nach einem der Ansprüche 1 bis 11,
dadurch gekennzeichnet, daß zur Ausbildung der Kammern (30,130,230) in dem Innenraum (12) des Formkörpers (10) zwei ineinander angeordnete, unterschiedliche Längen aufweisende und bodenseitig verschlossene, hohlzylindrische Einsatzkörper (25,125) aus Filterpapier angeordnet sind, von denen der Einsatzkörper (125) gegenüber der Länge des Formkörpers (10) eine kürzere Länge und der in dem Einsatzkörper (125) angeordnete Einsatzkörper (25) gegenüber der Länge des Einsatzkörpers (125) eine kürze Länge aufweist, daß die Böden der beiden Einsatzkörper (24,125) die Trennwände (20,30) bilden, daß zwischen den Böden die die Tassenportion (40) gemahlenen Kaffees aufnehmende Kammer (130) ausgebildet ist, und daß der Einsatzkörper (125) mit seinem oberen umlaufenden, seitlich auskragenden Rand (125a) auf dem umlaufenden Rand (14) des Formkörpers und der Einsatzkörper (25) mit seinem oberen umlaufenden, seitlich auskragenden Rand (25a) auf dem umlaufenden Rand (125a) des Einsatzkörpers (125) sich abstützt.

FIG.1

FIG.2

FIG.3

FIG.4

FIG.5

FIG.6

FIG.7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | FR-A-8 122 35 (MONO SERVICE) <br> * Insgesamt * <br><br> — — — | 1 | A 47 <br> J 31/06 <br> A 47 J 31/02 |
| A | FR-A-1 013 020 (DESCHAMPS) <br> * Insgesamt * <br><br> — — — | 1 | |
| A | FR-A-2 215 188 (BERNARDIN) <br> * Insgesamt * <br><br> — — — — — | 1 | |

|  | RECHERCHIERTE SACHGEBIETE (Int. Cl.5) |
|---|---|
| | A 47 J |

Der vorliegende Recherchenbericht wurde für alle Patentansprüche erstellt

| Recherchenort | Abschlußdatum der Recherche | Prüfer |
|---|---|---|
| Den Haag | 25 Januar 91 | NGO SI XUYEN G. |